# EUROPEAN PATENT APPLICATION

(11) **EP 4 741 195 A1**
(43) Date of publication of application: **13.05.2026**
(21) Application number: 25209425.5
(22) Date of filing: 17.10.2025
(51) Int. Cl.: B60K 1/00, B60K 5/00

(54) **SUPPORT STRUCTURE OF DRIVING DEVICE**

(30) Priority: 07.11.2024 JP 2024194933
(71) Applicant: Suzuki Motor Corporation, Shizuoka 432-8611 (JP)
(72) Inventor: NAKABAYASHI, Nobuo, HAMAMATSU-SHI, SHIZUOKA, 432-8611 (JP); HATTORI, Soichiro, HAMAMATSU-SHI, SHIZUOKA, 432-8611 (JP); EGUCHI, Hiroyuki, HAMAMATSU-SHI, SHIZUOKA, 432-8611 (JP); HAYASHI, Tsubasa, HAMAMATSU-SHI, SHIZUOKA, 432-8611 (JP); MIYATA, Keisuke, HAMAMATSU-SHI, SHIZUOKA, 432-8611 (JP); SATO, Tatsuki, HAMAMATSU-SHI, SHIZUOKA, 432-8611 (JP); IMAI, Kyohei, HAMAMATSU-SHI, SHIZUOKA, 432-8611 (JP)
(74) Representative: Plasseraud IP

(57) **Abstract**

[Problem to be Solved]

To provide a support structure of a driving device capable of arranging a wire harness by increasing a bending radius of the wire harness, and improving a degree of freedom of layout of the wire harness while preventing an excessive load from being applied to the wire harness.

[Solution]

In the support structure of a driving device (5), a wire harness (31) has a front side harness portion (31A) that extends from a position forward of the driving device (5) toward the driving device (5), and a bending portion (31B) that bends toward the driving device (5) from a rear end portion (31a) of the front side harness portion (31A) to extend in a vehicle width direction, with a connector (32) provided at a rear end portion being connected to a connector (30). A length (L1) in the vehicle width direction of a mount bracket (17) is formed to be longer than a length (L2) in the vehicle width direction of a mount bracket (18), and the bending portion (31B) is disposed above the mount bracket (17).

## Description

### [Technical Field]

The present invention relates to a support structure of a driving device.

### [Background Art]

Conventionally, there has been known a vehicle body structure in which a driving device that transmits rotational power outputted from a motor to rear wheels is disposed at a rear portion of a vehicle (see Patent Literature 1).

In this vehicle body structure, a battery is disposed in front of the driving device, and the battery and the driving device are connected by a high-voltage cable.

### [Citation List]

### [Patent Literature]

[Patent Literature 1] Japanese Patent No. 7413078

### [Summary of Invention]

### [Technical Problem]

Incidentally, for example, when a high-voltage cable needs to be bent and disposed due to the positional relationship between the driving device and the high-voltage cable, in the conventional vehicle body structure, there is a risk of the degree of freedom of layout of the high-voltage cable being limited in order to restrain an excessive load from being applied to the bending portion of the high-voltage cable.

The present invention is made in view of the circumstances as described above, and has an object to provide a support structure of a driving device capable of increasing a bending radius of a wire harness to arrange the wire harness, and improve a degree of freedom of layout of the wire harness while preventing an excessive load from being applied to the wire harness.

### [Solution to Problem]

The present invention provides a support structure of a driving device, the support structure including: a left side member and a right side member that are spaced apart in a vehicle width direction and extend in a front-rear direction of a vehicle; a driving device that has a rotating electric machine and an electric power control device that controls electric power that is supplied to the rotating electric machine, and is disposed between the left side member and the right side member in the vehicle width direction; a left mount bracket that connects the driving device and the left side member; a right mount bracket that connects the driving device and the right side member; and a wire harness that is connected to a connecting portion of the driving device, the support structure being characterized in that a length in the vehicle width direction of either one of the left mount bracket and the right mount bracket is formed to be longer than a length in the vehicle width direction of the other one of the left mount bracket and the right mount bracket, and the bending portion is disposed above either one of the left mount bracket and the right mount bracket, the wire harness having a front side harness portion that extends from a position forward of the driving device toward the driving device, and a bending portion that bends toward the driving device from a rear end portion of the front side harness portion to extend in the vehicle width direction, with a rear end portion being connected to the connecting portion, and the bending portion is disposed above either one of the left mount bracket and the right mount bracket.

### [Advantageous Effect of Invention]

As above, according to the present invention described above, it is possible to increase a bending radius of the wire harness to arrange the wire harness, and improve a degree of freedom of layout of the wire harness while preventing an excessive load from being applied to the wire harness.

### [Brief Description of Drawings]

[Figure 1] Figure 1 is a view showing a support structure of a driving device according to one embodiment of the present invention, which is a bottom view of a rear portion of a vehicle.
[Figure 2] Figure 2 is a view showing the support structure of a driving device according to one embodiment of the present invention, which is a left side view of the driving device.
[Figure 3] Figure 3 is a view showing the support structure of a driving device according to one embodiment of the present invention, which is a top view of the driving device and a mount bracket.
[Figure 4] Figure 4 is a view showing a support structure of a driving device according to one embodiment of the present invention, which is a perspective view of a left mount device.
[Figure 5] Figure 5 is a sectional view in a direction of arrows V to V in Figure 1.

### [Description of Embodiment]

A support structure of a driving device according to one embodiment of the present invention is a support structure of a driving device, the support structure including: a left side member and a right side member that are spaced apart in a vehicle width direction and extend in a front-rear direction of a vehicle; a driving device that has a rotating electric machine and an electric power control device that controls electric power that is supplied to the rotating electric machine, and is disposed between the left side member and the right side member in the vehicle width direction; a left mount bracket that connects the driving device and the left side member; a right mount bracket that connects the driving device and the right side member; and a wire harness that is connected to a connecting portion of the driving device, the support structure being characterized in that a length in the vehicle width direction of either one of the left mount bracket and the right mount bracket is formed to be longer than a length in the vehicle width direction of the other one of the left mount bracket and the right mount bracket, and the bending portion is disposed above either one of the left mount bracket and the right mount bracket, the wire harness having a front side harness portion that extends from a position forward of the driving device toward the driving device, and a bending portion that bends toward the driving device from a rear end portion of the front side harness portion to extend in the vehicle width direction, with a rear end portion being connected to the connecting portion, and the bending portion is disposed above either one of the left mount bracket and the right mount bracket.

Accordingly, the support structure of a driving device according to the one embodiment of the present invention can increase a bending radius of the wire harness to arrange the wire harness, and improve a degree of freedom of layout of the wire harness while preventing an excessive load from being applied to the wire harness.

### [Embodiment]

Hereinafter, a support structure of a driving device according to one embodiment of the present invention will be described by using the drawings.

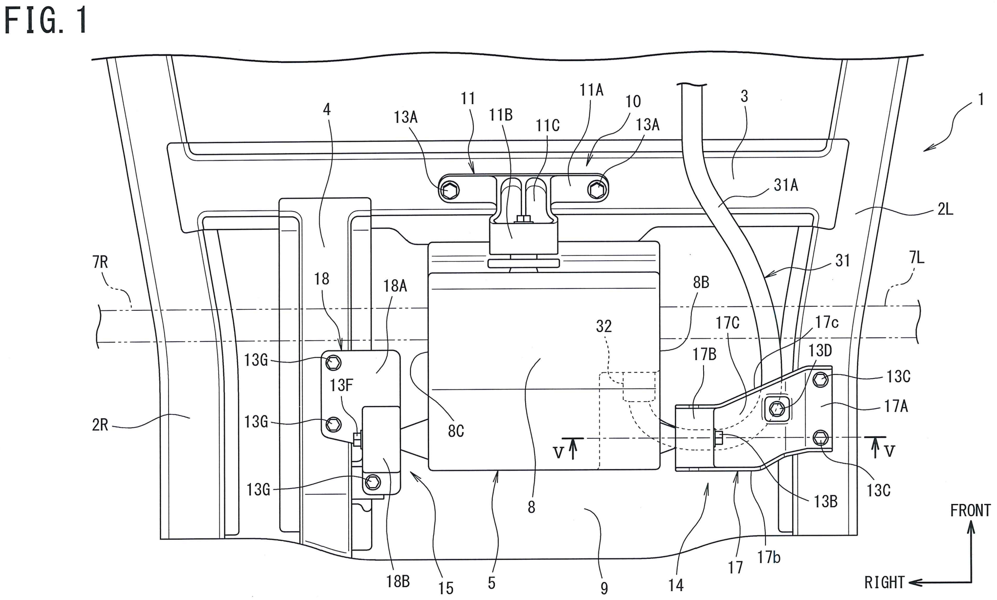

Figure 1 to Figure 5 are views showing the support structure of the driving device according to one embodiment of the present invention.

First, a configuration will be described.

In Figure 1 to Figure 5, up-down, front-rear, and left-right directions are based on the driving device in a state of being disposed in a vehicle, a front-rear direction of the vehicle is defined as a front-rear direction, a left-right direction (vehicle width direction) of the vehicle is defined as a left-right direction, and an up-down direction (height direction) of the vehicle is defined as an up-down direction.

As shown in Figure 1, a vehicle 1 includes a left side member 2L, a right side member 2R, a cross member 3, and a sub-side member 4.

The left side member 2L and the right side member 2R are disposed to be spaced apart in the vehicle width direction and extend in the front-rear direction. The vehicle width direction is the left-right direction.

The cross member 3 extends in the vehicle width direction, and left and right end portions thereof are connected to the left side member 2L and the right side member 2R. In the sub-side member 4, a front end portion is connected to the cross member 3, and a rear end portion is connected to a cross member on a rear side not illustrated.

The driving device 5 is disposed in a space surrounded by the left side member 2L, the sub-side member 4, and the cross member 3.

Specifically, the driving device 5 is disposed between the left side member 2L and the sub-side member 4 in the vehicle width direction and is disposed behind the cross member 3 in the front-rear direction. That is, the cross member 3 is disposed in front of the driving device 5.

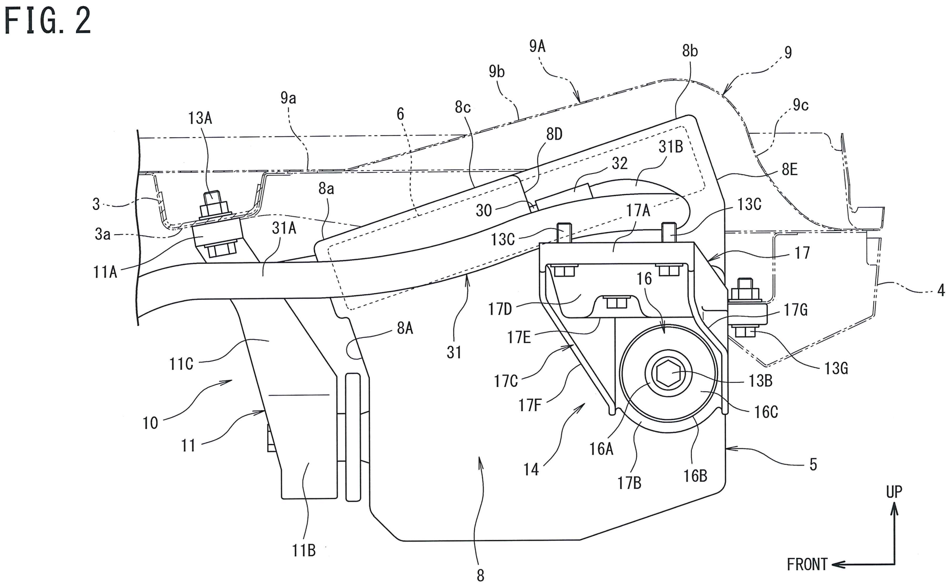

The driving device 5 has a motor generator not illustrated as a rotating electric machine, an inverter 6 (see Figure 2) as an electric power control device that is provided above the motor generator and controls electric power that is supplied to the motor generator, a speed reducer not illustrated that reduces driving power (rotational speed) of the motor generator, and a differential device not illustrated that transmits the power of the speed reducer to left and right rear wheels not illustrated via a left drive shaft 7L and a right drive shaft 7R.

The motor generator, the inverter 6, the speed reducer, and the differential device are accommodated in a driving case 8. The driving case 8 of the present embodiment configures a case.

The motor generator has a function as an electric motor that drives by electric power supplied from a high voltage battery not illustrated via the inverter 6, and a function as a generator that performs power generation by reverse driving power inputted from the differential device.

The inverter 6 converts DC electric power supplied from the high voltage battery into AC electric power of three phases to supply the AC electric power of three phases to the motor generator, and converts the AC electric power of three phases generated by the motor generator into DC electric power to charge the high voltage battery with it. The high voltage battery is composed by, for example, a secondary cell such as a lithium-ion battery.

As shown in Figure 2, the inverter 6 is disposed at an uppermost position of the driving case 8 to be positioned more upward than the motor generator, the speed reducer, and the differential device, and extends from an upper front end portion 8a to an upper rear end portion 8b in a space of an upper portion of the driving case 8.

As shown in Figure 2, the driving device 5 is disposed below a floor panel 9, and is positioned at a rear portion of the vehicle 1. At a front portion of the vehicle 1, a driving source, and left and right driving shafts and left and right front wheels to which power of the driving source is transmitted, all of which are not illustrated, are disposed.

The vehicle 1 of the present embodiment travels in a two-wheel drive mode when only the driving source on the front side is driven, and travels in a four-wheel drive mode when both the driving source and the driving device 5 are driven. The driving source on the front side is not particularly limited.

The driving device 5 is elastically supported at the cross member 3 by a front side mount device 10. The front side mount device 10 has a mount bracket 11.

The mount bracket 11 has a member attaching portion 11A that extends in the vehicle width direction and is fastened (connected) to a lower surface 3a of the cross member 3 by bolts 13A, an annular portion 11B that accommodates a cylindrical mount bush not illustrated that is connected to a front wall 8A of the driving case 8, and a connection portion 11C that connects the annular portion 11B and the member attaching portion 11A.

As shown in Figure 1, a left mount device 14 and a right mount device 15 are attached to the driving device 5, and the driving device 5 is elastically supported at the left side member 2L and the sub-side member 4 by the left mount device 14 and the right mount device 15.

As shown in Figure 2, a left mount device 14 has a cylindrical mount bush 16, and a mount bracket 17. The mount bracket 17 of the present embodiment configures a left mount bracket.

The mount bush 16 includes an inner cylinder 16A in which a central axis extends in the vehicle width direction, an outer cylinder 16B that is provided outward in a radial direction of the inner cylinder 16A and has a central axis extending in the vehicle width direction, and a mount rubber 16C that is provided between the inner cylinder 16A and the outer cylinder 16B in the radial direction and connects the inner cylinder 16A and the outer cylinder 16B, and the mount bush 16 is formed in a cylindrical shape as a whole.

The inner cylinder 16A is fastened (connected) to a left side wall 8B of the driving case 8 by a bolt 13B, and the mount bush 16 is disposed so that a central axis extends in the vehicle width direction.

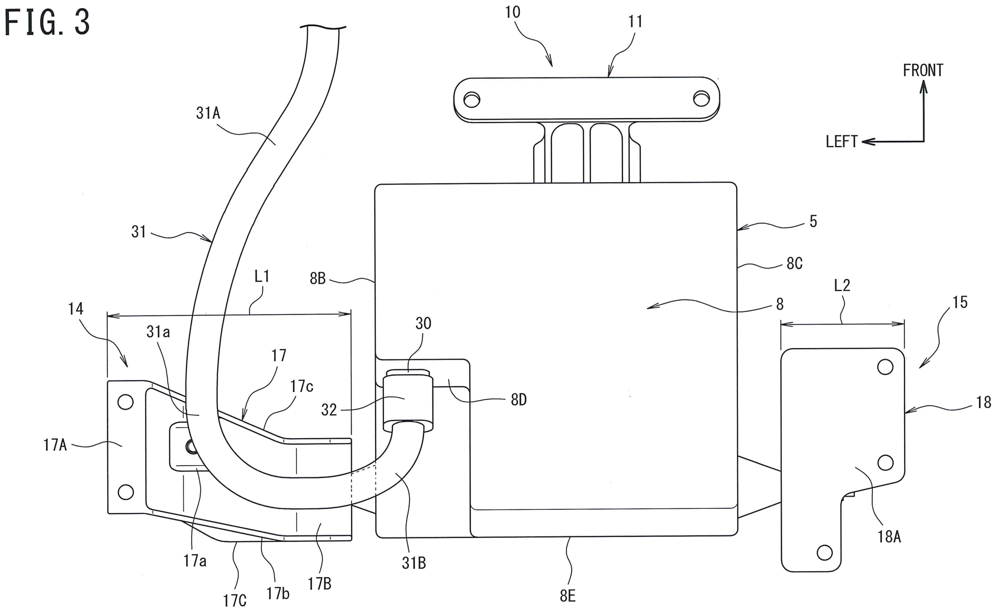

As shown in Figure 1 and Figure 3, the mount bracket 17 has a member attaching portion 17A that is fastened (connected) to a lower surface of the left side member 2L by bolts 13C (see Figure 1), an annular portion 17B in which the mount bush 16 is accommodated, and a connection portion 17C that connects the annular portion 17B and the member attaching portion 17A. The annular portion 17B of the present embodiment configures an accommodation portion.

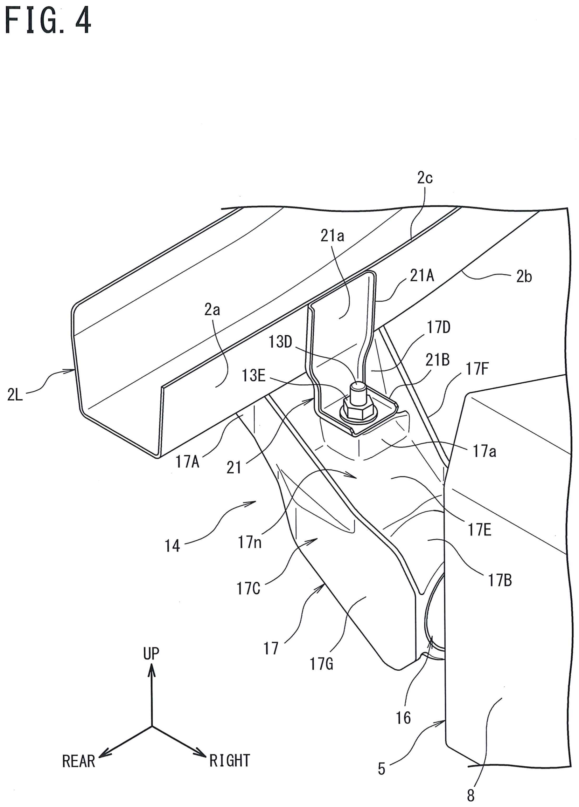

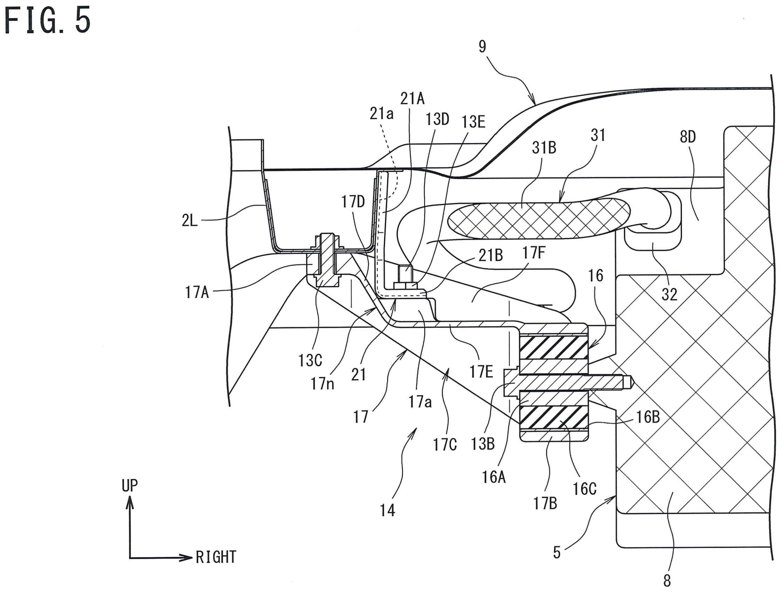

As shown in Figure 4 and Figure 5, the connection portion 17C has a first connection portion 17D that extends diagonally downward to a right side from the member attaching portion 17A, and a second connection portion 17E that extends in the vehicle width direction from the first connection portion 17D toward the driving device 5 and is connected to the annular portion 17B.

In other words, the mount bracket 17 has a step 17n that is made up of the member attaching portion 17A, the first connection portion 17D, and the second connection portion 17E.

A front wall 17F is connected to front end portions of the member attaching portion 17A, the connection portion 17C, and the annular portion 17B, and a rear wall 17G is connected to rear end portions of the member attaching portion 17A, the connection portion 17C, and the annular portion 17B.

Accordingly, in the mount bracket 17, stiffness against deformation in the front-end direction and the up-down direction is increased by the front wall 17F and the rear wall 17G.

The second connection portion 17E is provided with a bulged portion 17a, and the bulged portion 17a bulges upward from the second connection portion 17E. Furthermore, the bulged portion 17a bulges rightward from the first connection portion 17D.

In other words, the bulged portion 17a bulges from a connection portion of the first connection portion 17D and the second connection portion 17E. In the connection portion of the first connection portion 17D and the second connection portion 17E, stiffness is increased by the bulged portion 17a having high stiffness.

The mount bracket 17 is provided with a fastening bracket 21. The fastening bracket 21 has a first fastening bracket portion 21A and a second fastening bracket portion 21B.

The first fastening bracket portion 21A has an attachment portion 21a fastened to the left side member 2L, and extends downward from the attachment portion 21a.

The second fastening bracket portion 21B extends in the vehicle width direction from a lower end portion of the first fastening bracket portion 21A and is fastened to the bulged portion 17a by a bolt 13D and a nut 13E. That is, the second fastening bracket portion 21B is fastened to the second connection portion 17E via the bulged portion 17a.

The mount bracket 17 is fastened to the fastening bracket 21 and the left side member 2L at different levels in the up-down direction. That is, the mount bracket 17 has two fastening points that are a fastening point (member attaching portion 17A) where it is fastened to the left side member 2L, and a fastening point (bulged portion 17a) where it is fastened to the fastening bracket 21, and is supported at the left side member 2L by the member attaching portion 17A and the fastening bracket 21.

Accordingly, the mount bracket 17 can be shifted in the up-down direction and the vehicle width direction and fastened to the left side member 2L by the fastening bracket 21, and stiffness in support of the mount bracket 17 with respect to the left side member 2L is increased to be able to increase stiffness in support of the driving device 5 by the mount bracket 17.

In other words, the connection portion 17C is in the shape extending to be long in the vehicle width direction since the connection portion 17C extends downward from the member attaching portion 17A and in the vehicle width direction and is connected to the annular portion 17B, and it is possible to increase stiffness in support of the mount bracket 17 with respect to the left side member 2L by shifting the mount bracket 17 in the up-down direction and the vehicle width direction and fastening it to the left side member 2L by the fastening bracket 21.

As a result, it is possible to effectively restrain vibrations in the up-down direction and in the left-right and front-rear directions of the driving device 5 by the mount bracket 17.

Furthermore, since the second fastening bracket portion 21B is fastened to the bulged portion 17a, it is possible to reinforce the connection portion 17C by the bulged portion 17a having high stiffness, and it is possible to increase stiffness of the connection portion 17C. Furthermore, it is possible to increase attaching strength of the fastening bracket 21 by fastening the second fastening bracket portion 21B to the bulged portion 17a having high stiffness.

As a result, it is possible to further increase the stiffness in support of the mount bracket 17 with respect to the left side member 2L by further increasing the stiffness of the mount bracket 17, and it is possible to further increase stiffness in support of the driving device 5 by the mount bracket 17.

As shown in Figure 4, the attachment portion 21a extends to an upper end portion 2c from a lower end portion 2b of a side surface 2a in the vehicle width direction of the left side member 2L, and is fastened to the left side member 2L in a long range in the up-down direction by welding.

Accordingly, it is possible to increase the attaching strength of the fastening bracket 21 to the left side member 2L and it is possible to further increase stiffness in support of the mount bracket 17 with respect to the left side member 2L. As a result, it is possible to further increase stiffness in support of the driving device 5 by the mount bracket 17.

Note that the attachment portion 21a may be fastened to the left side member 2L by a bolt instead of welding.

As shown in Figure 1 and Figure 3, a right mount device 15 has a mount bracket 18. The mount bracket 18 has a member attaching portion 18A that is fastened to a lower surface of the sub-side member 4 by bolts 13G (see Figure 1), and an annular portion 18B in which a cylindrical mount bush not illustrated and including a mount rubber is accommodated, and the member attaching portion 18A is positioned more upward than the annular portion 18B.

The mount bracket 18 of the present embodiment configures a right mount bracket. The mount bush of the right mount device 15 is connected to a right side wall 8C of the driving case 8 by a bolt 13F.

In the front side mount device 10, the left mount device 14, and the right mount device 15, the annular portions 11B, 17B, and 18B are positioned at lowermost positions.

In other words, the driving device 5 is elastically supported by the left side member 2L, the sub-side member 4, and the cross member 3 in such a manner as to be suspended from the left side member 2L, the sub-side member 4, and the cross member 3 by the front side mount device 10, the left mount device 14, and the right mount device 15.

As shown in Figure 2, the driving device 5 is disposed in a forward inclined state so that the upper front end portion 8a of the driving case 8 is positioned more downward than the lower surface 3a of the cross member 3, and the upper rear end portion 8b is positioned more upward than the lower surface 3a of the cross member 3.

In other words, the driving device 5 is disposed in a forward inclined state so that an upper front end portion 8a of the driving case 8 is positioned more downward than an upper rear end portion 8b.

A bulged portion 9A is formed at a floor panel 9, and the bulged portion 9A bulges upward from a horizontal portion 9a of the floor panel 9.

The bulged portion 9A has an inclined portion 9b and a rear wall portion 9c. The inclined portion 9b faces an upper surface 8c of the driving case 8 in the up-down direction, and inclines upward from a front end portion toward a rear end portion. That is, a gap is formed between the inclined portion 9b and the upper surface 8c of the driving case 8.

Since the driving device 5 is disposed in a forward inclined state, the driving device 5 enters a vehicle interior from the horizontal portion 9a of the floor panel 9. Accordingly, it is possible to prevent a dimension in the up-down direction of the vehicle 1 from increasing and reduce the size of the vehicle 1.

As shown in Figure 3, a length L1 in the vehicle width direction of the mount bracket 17 is formed to be longer than a length L2 in the vehicle width direction of the mount bracket 18. That is, the length L1 in the vehicle width direction of the mount bracket 17 including the member attaching portion 17A, the connection portion 17C, and the annular portion 17B is formed to be longer than the length L2 in the vehicle width direction of the mount bracket 18 including the member attaching portion 18A and the annular portion 18B.

An upper portion of a left rear wall 8D of the driving device 5 is disposed more forward than an upper portion of a right rear wall 8E, and a wire harness 31 is connected to the left rear wall 8D.

The wire harness 31 has a front side harness portion 31A and a bending portion 31B. The front side harness portion 31A extends from a position forward of the driving device 5 toward the driving device 5, and a front end portion thereof is connected to a high voltage battery.

The bending portion 31B bends toward the driving device 5 from a rear end portion 31a of the front side harness portion 31A to extend in the vehicle width direction, and a connector 32 provided at a rear end portion is connected to a connector 30 provided at the left rear wall 8D. The connector 32 of the present embodiment configures a rear end portion of the bending portion 31B.

The bending portion 31B is disposed more rearward than the connector 30, and the bending portion 31B bends from the rear end portion 31a of the front side harness portion 31A, extends in the vehicle width direction, and thereafter bends forward toward the connector 30.

The connector 30 is electrically connected to the inverter 6, and the inverter 6 and the high voltage battery are electrically connected via the wire harness 31. The connector 30 of the present embodiment configures a connecting portion.

As shown in Figure 3, the mount bracket 17 is disposed so that a rear end portion 17b is positioned more rearward than the connector 30.

The mount bracket 17 is disposed in a vicinity of the connector 30. As shown in Figure 3 and Figure 5, the bending portion 31B is disposed above the connection portion 17C and is arranged between a front end portion 17c and the rear end portion 17b of the mount bracket 17 in the front-rear direction. Note that the front end portion 17c of the mount bracket 17 is the front wall 17F, and the rear end portion 17b is the rear wall 17G.

The mount bracket 17 extends in the vehicle width direction along the bending portion 31B, and the bending portion 31B bends from the rear end portion 31a of the front side harness portion 31A to the driving device 5 side above the connection portion 17C to extend in the vehicle width direction.

Next, an effect of the support structure of the driving device 5 of the present embodiment will be described.

The support structure of the driving device 5 of the present embodiment has the left side member 2L and the right side member 2R that are spaced apart in the vehicle width direction and extend in the front-rear direction, and the driving device 5 that has the motor generator, and the inverter 6 that controls electric power that is supplied to the motor generator, and is disposed between the left side member 2L and the right side member 2R in the vehicle width direction.

Furthermore, the support structure of the driving device 5 includes the mount bracket 17 that connects the driving device 5 and the left side member 2L, the mount bracket 18 that connects the driving device 5 and the right side member 2R, and the wire harness 31 that is connected to the connector 30 of the driving device 5.

The wire harness 31 has the front side harness portion 31A that extends from the position forward of the driving device 5 to the driving device 5 side, and the bending portion 31B that bends toward the driving device 5 from the rear end portion 31a of the front side harness portion 31A to extend in the vehicle width direction, with the connector 32 provided at the rear end portion being connected to the connector 30.

It is desirable that the wire harness 31 that connects the high voltage battery and the driving device 5 is arranged close to the driving device 5 at a side of the driving device 5 in order to increase ease of arrangement, and when the connector 30 is disposed at the left rear wall 8D of the driving case 8, it is necessary to bend the wire harness 31 in the vicinity of the connector 30 and arrange it.

When a gap in the vehicle width direction between the mount bracket 17 and the driving device 5 is small, it is necessary to reduce a bending radius of the bending portion 31B of the wire harness 31, and an excessive load is applied to the bending portion 31B.

According to the support structure of the driving device 5 of the present embodiment, the length L1 in the vehicle width direction of the mount bracket 17 is formed to be longer than the length L2 in the vehicle width direction of the mount bracket 18, and the bending portion 31B is disposed above the mount bracket 17.

Accordingly, it is possible to secure a large space in the vehicle width direction above the connection portion 17C, and by disposing the bending portion 31B of the wire harness 31 in this space, it is possible to increase the bending radius of the bending portion 31B and arrange the wire harness 31. As a result, it is possible to increase a degree of freedom of layout of the wire harness 31 while preventing an excessive load from being applied to the wire harness 31.

Furthermore, according to the support structure of the driving device 5 of the present embodiment, the mount bracket 17 has the member attaching portion 17A that is connected to the left side member 2L, the annular portion 17B that is positioned more downward than the member attaching portion 17A, and accommodates the mount bush 16 that is connected to the left side wall 8B of the driving case 8 of the driving device 5, and the connection portion 17C that extends downward from the member attaching portion 17A while inclining in the vehicle width direction, and is connected to the annular portion 17B.

As above, by inclining the mount bracket 17, it is possible to secure a large space surrounded by the left side member 2L, the mount bracket 17, the driving device 5, and the floor panel 9, and it is possible to dispose the wire harness 31 (bending portion 31B) in the surrounded space.

In other words, it is possible to secure the large space surrounded by the left side member 2L, the mount bracket 17, the driving device 5, and the floor panel 9 in a height direction. For this reason, the wire harness 31 is less likely to interfere with the mount bracket 17, and it is possible to more effectively improve the degree of freedom of the layout of the wire harness 31.

Furthermore, according to the support structure of the driving device 5 of the present embodiment, the member attaching portion 17A and the connection portion 17C have the step 17n, it is possible to secure a larger space surrounded by the left side member 2L, the mount bracket 17, the driving device 5, and the floor panel 9, and it is possible to dispose the wire harness 31 (bending portion 31B) in the surrounded space.

For this reason, the wire harness 31 is more effectively restrained from being disposed to be spaced apart more upward than the driving device 5, and the degree of freedom of the layout of the wire harness 31 can be more effectively improved.

In other words, it is possible to secure the large space surrounded by the left side member 2L, the mount bracket 17, the driving device 5, and the floor panel 9 in the height direction. For this reason, the wire harness 31 is less likely to interfere with the mount bracket 17, and it is possible to more effectively improve the degree of freedom of the layout of the wire harness 31.

Note that the left mount device 14 and the right mount device 15 of the present embodiment are interchanged in the left-right direction, the mount device having the same shape as the left mount device 14 may be used as a right mount device, and the mount device having the same shape as the right mount device 15 may be used as a left mount device. In this case, the fastening bracket 21 is applied to the left mount device having the same shape as the right mount device 15.

Although the embodiment of the present invention is disclosed, it is apparent that modifications can be added by those skilled in the art without departing from the scope of the present invention. It is intended that all such modifications and equivalents are included in the following claims.

### [Reference Signs List]

1... vehicle, 2L...left side member, 2R... right side member, 5...driving device, 6...inverter (electric power control device), 17... mount bracket (left mount bracket), 17A...member attaching portion, 17B... annular portion (accommodation portion), 17C... connection portion, 17n...step, 18... mount bracket (right mount bracket), 30...connector (connecting portion), 31...wire harness, 31A...front side harness portion, 31a...rear end portion (rear end portion of front side harness portion), 31B... bending portion, 32... connector (rear end portion of bending portion), L1...length in vehicle width direction of left mount bracket, L2...length in vehicle width direction of right mount bracket

## Claims

1. A support structure of a driving device, the support structure comprising:
a left side member (2L) and a right side member (2R) that are spaced apart in a vehicle width direction and extend in a front-rear direction of a vehicle (1);
a driving device (5) that has a rotating electric machine and an electric power control device (6) that controls electric power that is supplied to the rotating electric machine, the driving device (5) being disposed between the left side member (2L) and the right side member (2R) in the vehicle width direction;
a left mount bracket (17) that connects the driving device (5) and the left side member (2L);
a right mount bracket (18) that connects the driving device (5) and the right side member (2R); and
a wire harness (31) that is connected to a connecting portion (30) of the driving device (5),
the support structure being **characterized in that**
a length (L1 or L2) in the vehicle width direction of either one of the left mount bracket (17) and the right mount bracket (18) is formed to be longer than a length (L1 or L2) in the vehicle width direction of the other one of the left mount bracket (17) and the right mount bracket (18),
the wire harness (31) having
a front side harness portion (31A) that extends from a position forward of the driving device (5) toward the driving device (5), and a bending portion (31B) that bends toward the driving device (5) from a rear end portion (31a) of the front side harness portion (31A) to extend in the vehicle width direction, with a rear end portion (32) being connected to the connecting portion (30), and
the bending portion (31B) is disposed above either one of the left mount bracket (17) and the right mount bracket (18).

2. The support structure of a driving device as claimed in claim 1, wherein
either one of the left mount bracket (17) and the right mount bracket (18) has
a member attaching portion (17A, 18A) that is connected to either one of the left side member (2L) and the right side member (2R),
an accommodation portion (17B, 18B) that is positioned more downward than the member attaching portion (17A, 18A), and accommodates a mount bush that is connected to the driving device (5), and
a connection portion (17C, 18C) that extends downward from the member attaching portion (17A, 18A) while inclining in the vehicle width direction, and is connected to the accommodation portion (17B, 18B).

3. The support structure of a driving device as claimed in claim 2, wherein
the member attaching portion (17A, 18A) and the connection portion (17C, 18C) have a step (17n).
